# EUROPEAN PATENT SPECIFICATION

(11) **EP 1 086 851 B1**
(45) Date of publication and mention of the grant of the patent: **21.05.2003**
(21) Application number: 00120555.8
(22) Date of filing: 20.09.2000
(51) Int. Cl.: B60N 2/46

(54) **Armrest for a vehicle, in particular a motor vehicle, seat**
Armlehne für einen Kraftfahrzeugsitz
Accoudoir pour siège de véhicule automobile

(30) Priority: 21.09.1999 IT TO990807
(43) Date of publication of application: 28.03.2001
(73) Proprietor: GESTIND M.B. MANIFATTURA DI BRUZOLO S.P.A, 10050 Bruzolo (Torino) (IT)
(72) Inventor: Alpe, Stefano, 10050 Bruzolo (IT)
(74) Representative: Jorio, Paolo

(56) References cited:
- EP-A- 0 989 020
- DE-A- 4 227 871
- DE-A- 4 330 448

## Description

The present invention relates to an armrest for a vehicle seat, and in particular to an adjustable armrest for a motor vehicle, of the type comprising a supporting pin connectable integrally to the seat, and an elongated supporting body hinged to the supporting pin to rotate, about a hinge axis coincident with the pin axis, between a raised rest position and a lowered work position in which the supporting body extends in a substantially longitudinal direction of the vehicle.

The supporting body of known armrests is adjustable about the hinge axis and about the lowered position by means of a releasable angular retaining device comprising two sector gears, one of which is fixed and connected integrally to an outer peripheral portion of the pin, while the other is movable.

The movable sector gear is connected integrally to a jack lever forming part of an actuating device for shifting the movable sector gear to and from a forward position in which the sector gears mesh.

Armrests of the above type are unsatisfactory as regards the angular retaining device, which, though it provides for setting the supporting body to a number of user-selectable angular positions, calls for repeating the angular adjustment whenever the supporting body is rotated into the raised rest position.

That is, when the supporting body is moved into the raised position, the jack lever rotates together with the supporting body, and the movable sector gear is released from the fixed sector gear, thus enabling the supporting body to rotate freely in opposite directions for the remainder of its angular travel.

An armrest according to the preamble of claim 1 is described in DE-A-4 227 871.

It is an object of the present invention to provide an armrest for a vehicle, in particular a motor vehicle, seat, designed to solve the above problem in a straightforward, low-cost manner.

According to the present invention, there is provided an armrest for a vehicle, in particular a motor vehicle, seat, the armrest comprising a supporting member connectable integrally to a fixed connecting body; a supporting body rotatable, about a hinge axis and with respect to said supporting member, between a raised rest position and a lowered work position; angular retaining means comprising a first and a second member defined respectively by a first and a second retaining surface cooperating with each other to retain said supporting body in a number of angular work positions about said lowered work position, said first member being carried by said supporting body; and user-operated actuating means for disconnecting said retaining surfaces; characterized in that said second member is movable angularly, about said hinge axis, with respect to said supporting member; and by comprising first angular reference means for locking said second member in a reference position with respect to said supporting member.

A non-limiting embodiment of the invention will be described by way of example with reference to the accompanying drawings, in which:
Figure 1 shows a partial section of a preferred embodiment of the vehicle seat armrest according to the present invention in an angular work position;
Figure 2 shows the same view as in Figure 1, and illustrates, with parts removed for clarity, the Figure 1 armrest in an angular rest position;
Figure 3 shows a partly exploded, smaller-scale section along line III-III in Figure 1.

Number 1 in the accompanying drawings indicates as a whole an armrest for a vehicle, in particular a motor vehicle, seat.

Armrest 1 comprises a supporting pin 2, which is connected integrally in known manner to a fixed connecting body defined, in the example shown, by a lateral portion 3 of the seat, and projects from lateral portion 3 along a respective axis 4 parallel, in use, to a horizontal, transverse direction of the vehicle. Pin 2 comprises a lateral recess 5 defined by a cylindrical surface 6 coaxial with axis 4, and by an end surface 7 defining a radial projection integral with pin 2.

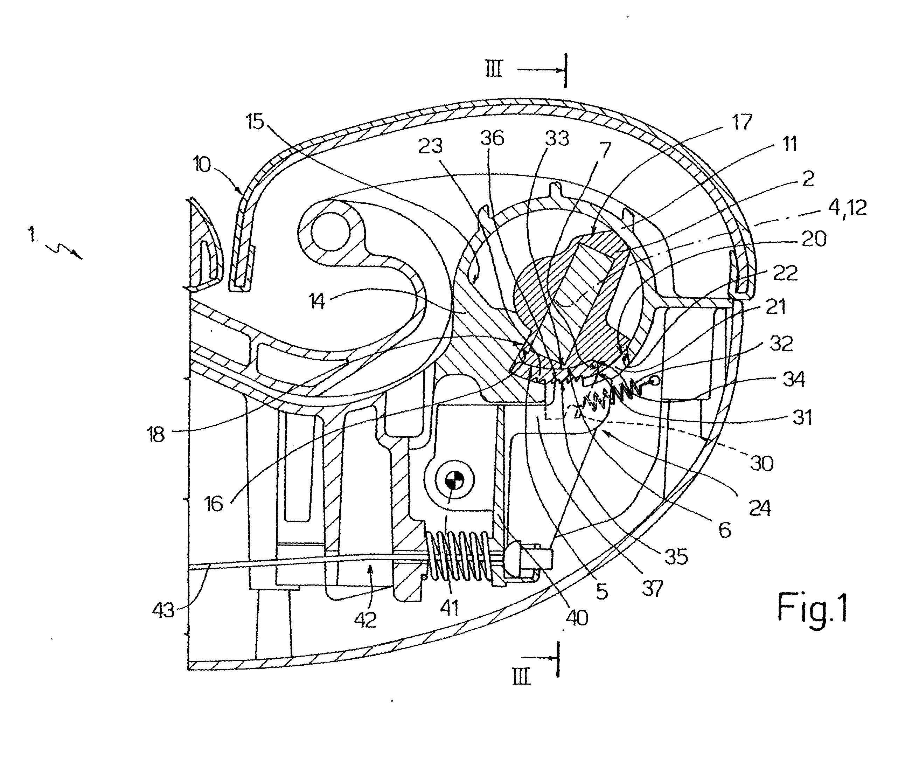

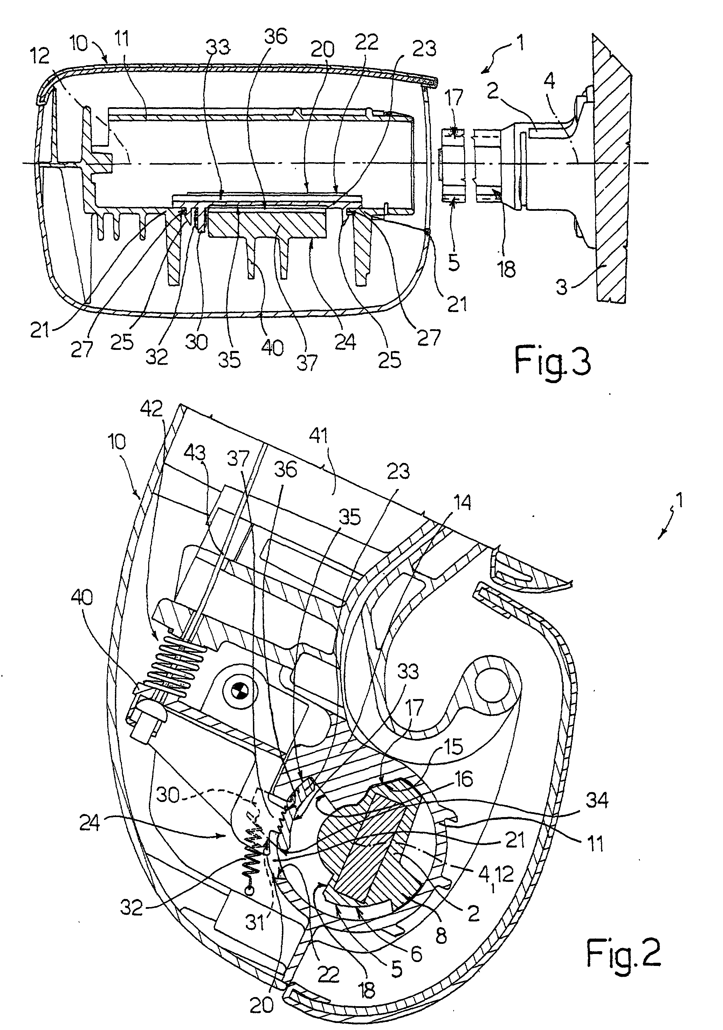

Armrest 1 also comprises an elongated supporting body 10 (shown partly) in turn comprising, at one end, a tubular portion 11 surrounding pin 2 and connected to pin 2 in rotary and axially fixed manner to enable body 10 to rotate, with respect to pin 2 and about a hinge axis 12 coincident with axis 4, between a raised rest position (Figure 2) and a lowered work portion (Figure 1) in which body 10 is substantially parallel, in use, to a longitudinal direction of the vehicle.

Tubular portion 11 has an integral inner radial projection 14 defined by two opposite surfaces 15 and 16, which contact respective surfaces 17 and 18 of pin 2 to define respective angular stops for the raised position and lowered position respectively.

Tubular portion 11 has a lateral opening 20 defined by two parallel circumferential portions 21, and by a substantially radial surface 22 facing surface 16.

When body 10 is in the lowered position (Figure 1), part of opening 20 is located at recess 5, which is engaged by a sector member 23 coaxial with axis 12 and interposed between body 10 and pin 2.

Member 23 forms part of an assembly 24 for angularly retaining body 10, and is clicked onto tubular portion 11 in rotary and axially fixed manner by means of two elastic appendixes 25.

With reference to Figure 3, elastic appendixes 25 are integral with member 23, extend through opening 20, and are defined by respective radial surfaces 27, which slide on relative portions 21 and are separated by a distance substantially equal to that between portions 21, so as to enable elastic appendixes 25 to lock member 23 axially with respect to tubular portion 11.

As shown in the accompanying drawings, member 23 also has an outer radial appendix 30, which extends through opening 20 in an intermediate position between elastic appendixes 25 and is defined by a surface 31 facing surface 22. Appendix 30 is connected to one end of a helical spring 32 interposed between body 10 and member 23 and preloaded to exert a substantially tangential elastic force to push member 23 towards surfaces 7 and 22.

Member 23 is defined by a cylindrical surface 33 coaxial with axis 12, and by a substantially radial surface 34, which contact surface 6 and surface 7 respectively when body 10 is in the lowered position (Figure 1).

Member 23 is also defined by an outer toothed cylindrical surface 35, which extends coaxially with axis 12 on the opposite side to surface 33 and in an intermediate position between elastic appendixes 25, and cooperates with a corresponding inner toothed cylindrical surface 36 defined by a sector 37 forming part of angular retaining assembly 24.

Sector 37 is integral with a known jack lever 40 hinged to body 10 to rotate, about an axis 41 parallel to axis 12, to and from a forward retaining position meshing toothed surfaces 35 and 36, and is user-operated manually by means of a control device 42 housed in body 10 and comprising, in the example shown, a push-button (not shown), and a transmission cable 43 interposed between the push-button and lever 40.

In a variation not shown, surfaces 35 and 36 are rough cylindrical surfaces cooperating frictionally with each other.

In actual use, assembly 24 provides for adjusting the angular position of body 10 about the lowered position. With body 10 in the lowered position, lever 40 is rotated by means of device 42 to withdraw sector 37 from member 23, so that surfaces 35 and 36 disengage, and body 10 is free to rotate, about axis 12 and with respect to pin 2 and member 23, by the maximum angular distance defined by the angular extension of opening 20, while member 23 is retained, by spring 32, resting against surface 7 in a reference position with respect to pin 2.

Once body 10 is tilted as required, surfaces 35 and 36 engage, so that member 23 is locked between pin 2 and sector 37 of lever 40 to retain body 10 in the selected angular position, while surfaces 16 and 18 are separated angularly with the exception of the stop position of body 10.

As body 10 rotates into the raised position with toothed surfaces 35 and 36 meshing with each other (Figure 2), member 23 rotates, about axis 12 and with respect to pin 2, integrally with tubular portion 11 to disengage recess 5.

When body 10 is restored to the lowered position without device 42 being activated, and hence with toothed surfaces 35 and 36 still meshing with each other, member 23 once more engages recess 5, so that cylindrical surfaces 6 and 33 cooperate in sliding manner, and, upon surface 34 coming to rest against surface 7, body 10 is set to the same angular position as before.

If device 42 is activated with body 10 in an angular position close to the raised position, surfaces 35 and 36 disengage, and spring 32 brings surface 31 of appendix 30 to rest against surface 22 defining opening 20, so that member 23 is arrested, with respect to tubular portion 11, in an angular reference position in which surfaces 35 and 36 are still positioned facing each other and therefore still engageable.

Angular retaining assembly 24 therefore provides for retaining body 10 in a number of angular work positions about the lowered position, while, unlike known solutions, member 23, angularly movable with respect to pin 2, avoids having to adjust the tilt of body 10 whenever body 10 is shifted from the lowered position.

That is, the fact that member 23 is angularly movable with respect to pin 2 enables surfaces 35 and 36 to be kept engaged, while surface 7 defines a shoulder for angularly locking member 23 in a reference position, so as to adjust the tilt of body 10 and keep body 10 in the selected angular position. In other words, member 23 and surface 7 provide for memorizing the selected angular work position of body 10, regardless of the rotation of body 10 between the raised and lowered positions.

Moreover, surface 22 defines a shoulder for keeping surfaces 35 and 36 facing each other, even when sector 37 is disconnected from member 23 and body 10 is set to other than the lowered position, by limiting the angular travel of member 23 with respect to tubular portion 11.

Clearly, changes may be made to armrest 1 as described herein without, however, departing from the scope of the present invention.

In particular, member 23 may be formed and/or located otherwise than as described and illustrated herein, e.g. may be connected in rotary manner to pin 2, as opposed to tubular portion 11; surfaces 35 and 36 may be disengaged by an actuating device other than lever 40 and device 42; and spring 32 may be replaced with one or more different elastic elements.

## Claims

1. An armrest (1) for a vehicle, in particular a motor vehicle, seat, the armrest comprising a supporting member (2) connectable integrally to a fixed connecting body (3); a supporting body (10) rotatable, about a hinge axis (12) and with respect to said supporting member (2), between a raised rest position and a lowered work position; angular retaining means (24) comprising a first (37) and a second (23) member defined respectively by a first (36) and a second (35) retaining surface cooperating with each other to retain said supporting body (10) in a number of angular work positions about said lowered work position, said first member (37) being carried by said supporting body (10); and user-operated actuating means (40, 42) for disconnecting said retaining surfaces (35, 36); **characterized in that** said second member (23) is movable angularly, about said hinge axis (12), with respect to said supporting member (2); and by comprising first angular reference means (7) for locking said second member (23) in a reference position with respect to said supporting member (2).

2. An armrest as claimed in Claim 1, **characterized in that** said first angular reference means (7) comprise a fixed first shoulder (7); said second member (23) cooperating with and coming to rest against said first shoulder (7).

3. An armrest as claimed in Claim 2, **characterized in that** said first shoulder (7) is formed on said supporting member (2).

4. An armrest as claimed in Claim 2 or 3, **characterized by** comprising first elastic means (32) for pushing said second member (23) towards said first shoulder (7).

5. An armrest as claimed in any one of the foregoing Claims, **characterized by** comprising second angular reference means (22) for said second member (23) and carried by said supporting body (10).

6. An armrest as claimed in Claim 5, **characterized in that** said second angular reference means (22) comprise a second shoulder (22) for angularly locking said second member (23), at least when said supporting body (10) is positioned close to said raised rest position and said retaining surfaces (35, 36) are disengaged.

7. An armrest as claimed in Claim 6, **characterized by** comprising second elastic means (32) for pushing said second member (23) towards said second shoulder (22).

8. An armrest as claimed in Claims 4 and 7, **characterized in that** said first and second elastic means comprise a single spring (32) interposed between said second member (23) and said supporting body (10).

9. An armrest as claimed in any one of the foregoing Claims, **characterized by** comprising axial locking means (27) for keeping said second retaining surface (35) in an axially fixed position with respect to said first retaining surface (36).

10. An armrest as claimed in any one of the foregoing Claims, **characterized by** comprising click-on connecting means (25) for connecting said second member (23) to said supporting body (10) in rotary manner about said hinge axis (12) and in an axially fixed position.

## Patentansprüche

1. Armlehne (1) für einen Fahrzeugsitz, insbesondere einen Kraftfahrzeugsitz, wobei die Armlehne ein Tragelement (2) besitzt, das mit einem feststehenden Anschlussstück (3) komplett verbunden werden kann; ein um eine Drehgelenksachse (12) und in Bezug auf das Tragelement (2) drehbares Tragelement (10) zwischen einer erhöhten Ruhestellung und einer abgesenkten Arbeitsposition; winkelförmige Halterungen (24) mit einem ersten (37) und einem zweiten (23) Element, das jeweils durch eine erstc (36) und eine zweite (35) Haltefläche bestimmt wird, die miteinander in Verbindung stehen, um das Tragelement (10) in einer Reihe schräger Arbeitspositionen um die abgesenkte Arbeitsposition herum zu halten, wobei das erste Element (37) von dem Tragelement (10) getragen wird; und ein vom Benutzer zu betätigendes Betätigungsteil (40, 42), um die Halteflächen (35, 36) zu trennen; **dadurch gekennzeichnet, dass** das zweite Element (23) in Bezug auf das Tragelement (2) um die Drehgelenksachse (12) herum schräg verschiebbar ist; und mit einer ersten, schrägen Bezugsanordnung (7), um das zweite Element (23) in einer Bezugsposition hinsichtlich des Tragelementes (2) zu verriegeln.

2. Armlehne nach Anspruch 1, **dadurch gekennzeichnet, dass** die erste, schräge Bezugsanordnung (7) einen ersten, feststehenden Bund (7) besitzt, wobei das zweite Element (23) mit dem ersten Bund (7) in Verbindung steht und an diesem anliegt.

3. Armlehne nach Anspruch 2, **dadurch gekennzeichnet, dass** sich der Bund (7) an Tragelement (2) befindet.

4. Armlehne nach Anspruch 2 oder 3, **dadurch gekennzeichnet, dass** sie ein elastisches Teil (32) besitzt, um das zweite Element (23) in Richtung des Bundes (7) zu drücken.

5. Armlehne nach einem der vorhergehenden Ansprüche, **dadurch gekennzeichnet, dass** sie für das zweite Element (23) eine zweite, schräge Bezugsanordnung (22) besitzt, die von dem Tragelement (10) getragen wird.

6. Armlehne nach Anspruch 5, **dadurch gekennzeichnet, dass** die zweite, schräge Bezugsanordnung (22) einen zweiten Bund (22) zur winkelförmigen Verriegelung des zweiten Elementes (23) besitzt, und zwar zumindest dann, wenn sich das Tragelement (10) nahe an der erhöhten Ruhestellung befindet und die Halteflächen (35, 36) entriegelt bzw. gelöst sind.

7. Armlehne nach Anspruch 6, **dadurch gekennzeichnet, dass** sie ein zweites, elastisches Teil (32) besitzt, um das zweite Element (23) in Richtung des zweiten Bundes (22) zu drücken.

8. Armlehne nach Anspruch 4 und 7, **dadurch gekennzeichnet, dass** der erste und zweite elastische Teil eine einzelne Feder (32) besitzt, die zwischen dem zweiten Element (23) und dem Tragelement (10) liegt.

9. Armlehne nach einem der vorhergehenden Ansprüche, **dadurch gekennzeichnet, dass** sie axiale Verriegelungen (27) besitzt, um die zweite Haltefläche (35) in Bezug auf die erste Haltefläche (36) in einer axial feststehenden Position zu halten.

10. Armlehne nach einem der vorhergehenden Ansprüche, **dadurch gekennzeichnet, dass** sie *Click-on* -Verbindungsstücke (25) besitzt, um das zweite Element (23) mit dem Tragelement (10) drehend um die Drehgelenksachse (12) herum und in einer axial feststehenden Position zu verbinden.

## Revendications

1. Accoudoir (1) de véhicule, en particulier d'un siège de véhicule à moteur, l'accoudoir comportant un élément de support (2) pouvant être relié en un seul bloc à un corps de liaison fixe (3), un corps de support (10) rotatif autour d'un axe d'articulation (12) et par rapport audit élément de support (2), entre une position relevée inactive et une position abaissée active, des moyens de retenue angulaire (24) comportant un premier (37) et un second (23) élément définis respectivement par une première (36) et une seconde (35) surface de retenue coopérant l'une avec l'autre pour retenir ledit corps de support (10) dans plusieurs positions angulaires actives autour de ladite position abaissée active, ledit premier élément (37) étant supporté par ledit corps de support (10), et des moyens d'actionnement actionnés par l'utilisateur (40, 42) pour déconnecter lesdites surfaces de retenue (35, 36), **caractérisé en ce que** ledit second élément (23) est angulairement mobile, autour dudit axe d'articulation (12), par rapport audit élément de support (2), et **en ce qu'**il comporte des premiers moyens de référence angulaire (7) pour bloquer ledit second élément (23) dans une position de référence par rapport audit élément de support (2).

2. Accoudoir selon la revendication 1, **caractérisé en ce que** lesdits premiers moyens de référence angulaire (7) comportent un premier épaulement fixé (7), ledit second élément (23) coopérant avec ledit premier épaulement (7) et venant en appui contre celui-ci.

3. Accoudoir selon la revendication 2, **caractérisé en ce que** ledit premier épaulement (7) est formé sur ledit élément de support (2).

4. Accoudoir selon la revendication 2 ou 3, **caractérisé en ce qu'**il comporte des premiers moyens élastiques (32) pour pousser ledit second élément (23) en direction dudit premier épaulement (7).

5. Accoudoir selon l'une quelconque des revendications précédentes, **caractérisé en ce qu'**il comporte des seconds moyens de référence angulaire (22) pour ledit second élément (23) et supportés par ledit corps de support (10).

6. Accoudoir selon la revendication 5, **caractérisé en ce que** lesdits seconds moyens de référence angulaire (22) comportent une second épaulement (22) pour bloquer angulairement ledit second élément (23), au moins lorsque ledit corps de support (10) est positionné à proximité de ladite position relevée inactive et lesdites surfaces de retenue (35, 36) sont libérées.

7. Accoudoir selon la revendication 6, **caractérisé en ce qu'**il comporte des seconds moyens élastiques (32) pour pousser ledit second élément (23) en direction dudit second épaulement (22).

8. Accoudoir selon les revendications 4 et 7, **caractérisé en ce que** lesdits premiers et seconds moyens élastiques comportent un ressort unique (32) interposé entre ledit second élément (23) et ledit corps de support (10).

9. Accoudoir selon l'une quelconque des revendications précédentes, **caractérisé en ce qu'**il comporte des moyens de blocage axial (27) pour maintenir ladite seconde surface de retenue (35) dans une position axialement fixe par rapport à ladite première surface de retenue (36).

10. Accoudoir selon l'une quelconque des revendications précédentes, **caractérisé en ce qu'**il comporte des moyens de liaison par encliquetage (25) pour relier ledit second élément (23) audit corps de support (10) d'une manière rotative autour dudit axe d'articulation (12) et dans une position axialement fixée.
